# EUROPEAN PATENT APPLICATION

(11) **EP 2 500 071 A1**
(43) Date of publication of application: **19.09.2012**
(21) Application number: 10829388.7
(22) Date of filing: 12.11.2010
(51) Int. Cl.: B01D 5/00, F28B 5/00, B67D 7/04

(54) **APPARATUS AND METHOD FOR RECOVERING VOLATILE LIQUIDS**

(30) Priority: 12.11.2009 BR PI0904627
(71) Applicant: Rosa, Airton Da Silva, 89201-440 Joinville- Santa Catarina (BR)
(72) Inventor: ROSA, Airton da Silva, 89201-440 Joinville- Santa Catarina (BR); NETO, Ernesto Raizer, 88380-000 Piçarras- Santa Catarina (BR)
(74) Representative: Schneider Feldmann AG Patent- und Markenanwälte
(86) International application number: PCT/BR2010/000382
(87) International publication number: WO 2011/057375

(57) **Abstract**

The present invention relates to an apparatus and method for recovering volatile liquids collected in volatile storage tanks (T). The apparatus comprises absorption and condensation chambers (3, 8, 9, 10, 11) with transverse evaporation elements (12) and metallic elements having a high surface area, through which the gas mixture flows, is condensed and recirculated both internally and externally. These features make it possible to reduce the size of and increase the heat exchange efficiency and yield of the apparatus (R).

## Description

### Field of the Invention

The present invention relates generally to an apparatus and process for recovering volatile liquids from the collection and processing of vapors generated in fueling and tankage operations or physical, mechanical or chemical processes utilizing volatile products.

Aforesaid volatile liquids can be defined as pure or mixed substances whose vapor pressure at room temperature is greater than 0.0006805 atm and boiling point is lower than 260°C. When these products are of organic nature they are called "Volatile Organic Compounds", commonly referred to as VOC, and are included in a comprehensive range of toxic substances.

### Background of the Invention and their deficient features

A person skilled in the art is aware that the polluting effect of such compounds is due to the fact that they participate in photochemical reactions when dispersed in the environment thus acting as a catalyst for the formation of ozone and other photochemical oxidants and, consequently, showing a highly harmful oxidant effect to plant and animal life. These vapors are denser than air thus increasing their concentration in lower areas and enabling their explosion when in contact with an ignition source or a static electricity source.

In order to solve some of these inconveniences, a process for recovering gasoline vapor collected in storage tanks and the processing of the recovered vapor so as to condense it has been proposed, as disclosed in patent application PI 9205606-7 and US 5,220,799. Process comprises a source of inert gas, preferably nitrogen. Such source of inert gas is coupled by a proper regulatory system for its supply to a top space in the storage tank where it displaces liquid gasoline as the gasoline is pumped from the storage tank to individual vehicles. Referred process suggests the addition of gaseous nitrogen into the storage tank, at room temperature, whenever there is a reduction in liquid volume. These documents further propose a condensation process of the mixture inert gas plus gasoline vapor and liquid nitrogen and further recycling of condensed product to the storage tank and emission of the inert gas plus the noncondensed fraction into the atmosphere.

The values and the fact that nitrogen supply, in liquid or gas form, is provided by just a few companies, though, has restricted its use to fuel production companies where nitrogen is already available for other processes.

Process yield is higher than 95% although constant defrosting is required as it operates in temperatures below the melting point of most Volatile Organic Compounds (VOC).

Another proposed solution is the object of patent application PI 9600925-0 related to an improvement developed in fuel vapor recovery equipment intended to be integrated to fuel tanks when fueling so as to allow vapor collecting. Equipment comprises a cooling unit whose evaporator is packed in condensate baffles thus causing liquefaction of fuel vapors and recovering condensate and releasing treated gaseous form into the atmosphere. Besides, it is provided with several baffles inside wherein the mixture air and vapor conduct thermal exchange resulting in fuel condensation. In summary, the patent application discloses a process for condensing fuel vapor by contacting it to a cold baffle, a common concept in several unit operations within the petrol, paint and adhesive industry, beverages and alcohol production, etc.

Condensation processes utilizing a cold element only in contact with vapor do not possess proper efficiency and yield due to the several thermal resistances involved and, as a consequence, low overall heat transfer coefficient values, thus requiring large heat exchange areas and a high energy consumption so as to generate the cold required for condensation. Yield in such processes is not higher than 70% of original mass condensation present in the vapor.

Another document that may be mentioned is patent application MU 8403420-3 disclosing a vapor recovery system in volatile organic liquid storage facilities by a process of condensation in temperatures below -30° C achieved by a refrigeration cycle acting on pairs of condensers and separators that allow the recovery of several liquids without mixing them. The condenser and separator pairs operate alternately to cool and heat so as to separate the moisture present in vapors. However, this process requires the use of coolant gases and powerful compression and evaporation systems to achieve indicated temperatures. As in vapor phase air moisture is present due to vehicle fueling, water will be solidified into the pipes thus causing severe operational problems during defrosting inside the heat exchange pipes.

Although this process has a yield similar to the process included in the present patent of invention, it requires the use of several independent units whose efficiency for products with very close volatility becomes totally innocuous in terms of separation degree.

Document PI 9905312-8 discloses a process that complements the aforementioned documents, the incorporation of a dehumidifying unit for the gaseous mixture coming from fuel tanks using a desiccant element encapsulated in a cartridge through which the mixture flows before going through the condensation process, such as it is recommended in the above mentioned patent applications or, as disclosed in PI 9905312-8 "dehumidified vapors are then condensed in liquid form by heat exchange with an intermediate fluid kept at cooling temperature in contact with exchanging means travelled by a coolant".

Conversion yield of such a process is similar to that obtained in the present invention. However, the main difference is in the need to incorporate a dehumidifying unit because inlet air in the tanks during discharge for other processes does not foresee the treatment of the inlet air as carried out in the equipment which is the object of the present patent application.

Besides the foregoing disadvantages, these patent applications are nothing more than the direct application of condensation requiring large heat exchange areas, low heat transfer values, low mass and a large energy consumption.

### Summary of the Invention

In order to solve the problems included in the prior art, the present invention discloses an apparatus and process for recovering volatile liquids which, for the condensation to take place, performs a thermal exchange not only with the equipment evaporative elements but also with the condenser itself thus increasing the efficiency in volatile recovery.

In the present equipment, there is a constant stream of a gaseous mixture containing volatile liquids which first passes through at least one absorption chamber and then through condensation chambers with the deposition of condensates at the bottom of each chamber through which the referred stream also goes through resulting in a thermal exchange besides the one carried out in the direct contact with evaporators. Part of the stream of resulting gaseous mixture recirculates into the equipment to meet the inlet stream thus contributing for a better use of thermal energy and promoting absorption in the inlet chamber. That happens because these streams have the two driving forces, that is, difference in concentration and in temperature, required to increase equipment performance measured by the amount of vapor changing from vapor to liquid forms.

Equipment may further include a relief valve for negative or positive internal pressure. Accordingly, the equipment may be provided with a cartridge of adsorbent material in the outlet pipe for the cases in which the emission threshold is more restrictive than that obtained in the previously described processes.

Equipment further comprises a defrosting system with automatic operation whenever condensing elements need declogging, as they can be clogged by freezing of possible moisture entering the system as well as by some compounds with a melting point higher than the operation temperature.

The object of the present equipment is to prevent health problems for operators of volatile product processes, air and water pollution, fire safety and commercial loss prevention.

### Brief Description of the Drawings

The schematic figures below are from an embodiment of the present invention whose dimensions and proportions are not necessarily the actual ones since the purpose of such figures is to didactically show the several different aspects of the present invention whose extension of term is determined only by the scope of the attached claims.

The present invention will be described based on the attached drawings, wherein:
- Figure 1 is a schematic perspective view of the volatile liquid recovery equipment (R) of the present invention;
- Figure 2 is schematic view of the application of the present equipment (R) at the outlet vent (E) of a tank (T);
- Figure 3 is a schematic view of an open storage system wherein the tank (T) is partially filled with liquid (L) and the release of a few molecules (V) of the liquid (L) in gaseous form coming out from an upper vent (E) into the atmosphere (A);
- Figure 4 is a schematic view of a closed storage system with a relief valve (V2) mounted in the vent (E) of the tank (T);
- Figure 5 is schematic view of the tank (T) with a simulation of air addition where the intermittent use of the stored volatile compound (V) takes place; and,
- Figure 6 is a schematic view with a simulation of the discharge of pollutant gases into the atmosphere (A) during tank (T) volume loading.

### Detailed Description of the Invention

As illustrated in figure 1, the volatile liquid recovery equipment (R) of the present invention is made up by a housing (C) of a specially parallelepipedal shape comprising at least one inlet pipe (1) of gaseous mixture evaporated from volatile liquids and at least one outlet pipe (5) of recovered liquid which, in this particular example, is provided with an inlet pipe (1) and an outlet pipe (5); said housing (C) being divided into a series of vertical plates (19a and 19), interrupted before the inner upper face of the housing (C), and forming consecutive absorption and condensation chambers (3, 8, 9, 10, 11) from the inlet pipe (1) to the outlet pipe (5); said plates (19a and 19) are provided with an upper closure element (20) limiting the chambers (8, 9, 10) and forming an upper passage (21); plates (19) further comprise openings (14) that allow for the passage of the gaseous mixture among the chambers (8, 9, 10, 11); equipment is further comprised by at least one evaporative element (12) transversally arranged in the chambers (8, 9, 10, 11); and, at least one opening (15) in the element (20) for the gaseous mixture to come out of the chamber (8) into the passage (21).

Plate (19a) is made up from the housing (C) base while plates (19) are minimally away from the housing (C) base so as to allow for the passage of the condensate from one chamber to the other and be later guided to the outlet pipe (5).

Plate openings (14) between chambers (8 and 9), (9 and 10) and (10 and 11) are alternately positioned up and down thus forcing gaseous mixture to travel along the entire chamber height (11, 10, 9 and 8) and crossing the evaporative elements (12). As chamber (11) is open at the top, opening (14) of first plate (19) is located close to its base, thus forcing gaseous mixture to stream through the entire chamber (11) extension. So, opening (14) of the next plate (19) is close to the element (20) forcing gaseous mixture to stream through the entire chamber (10). Inversely, the following plate (19) has its opening close to the base, where gaseous stream enters chamber (8) and follows an ascending path until it comes out through opening (15).

This way, there is a first chamber (3) for the entry of gaseous mixture that follows its stream through the upper passage (21) and entering chamber (11). From that chamber (11), gaseous mixture follows towards lower opening (14) of plate (19), passing through evaporative elements (12). When passing through opening (14), gaseous mixture goes up to chamber (10) crossing again the evaporative elements (12) until it comes out through upper opening (14) entering chamber (9) where it goes down towards lower opening (14) to enter chamber (8). From chamber (8), gaseous mixture goes up crossing the evaporative elements (12) up to outlet (15) where it finds and absorbs a new gaseous stream. Opening (15) returns gaseous mixture to the stream of chambers (3) and (21).

Equipment (R) further comprises at least one pipe (16) from chamber (8) with at least one relief valve (18) for the gas outlet when there is a build-up of pressure inside the housing (C). Pipe (16) further comprises at least one adsorbent material cartridge (17). Relief valve (18) operates with a negative or positive pressure.

Housing (C) is thermally insulated to ensure an adiabatic regimen to the equipment (R).

Evaporative elements (12) are independent and controlled so as to allow the temperature gradient required for each heat transfer element.

As illustrated in figure 2, pipe (1) is connected to vent (E) of a volatile organic compound tank (T) and comprises a branch pipe (2) and a stopcock (4) to carry out tasks such as insulate equipment (R) for maintenance, drain and control height of recovered liquid in chamber (3) by handling the stopcock (4). This way, for equipment (R) maintenance, stopcocks (4) and (6) are fully opened to release equipment (R) content and deflect gaseous mixture stream from pipe (1) to pipe (2) which then escapes back to tank (T).

Height of recovered liquid in chamber (3) is also controlled by opening/closing stopcocks (4), which allows for the deflection of part of gaseous mixture through the pipe (2) and then for the outlet pipe (5), thus functioning as a level control of the liquid in chamber (3).

Gaseous mixture leaves tank (T) through pipe (1) and enters chamber (3) which, having an area larger than pipe (1), allows for gas expansion, thus reducing its speed within equipment (R). Equipment (R) is kept at low temperatures e.g. -40°C, by its evaporative elements (12) which promote a thermal shock in gaseous mixture when it enters chamber (3) and enabling immediate condensation of part of the gases which, in turn, decant on the bottom of chamber (3) and accumulate at the front of inlet pipe (1). This way, at the beginning of equipment (R) operation, gaseous mixture comes across a lower temperature ambient, but after a first operation cycle, equipment (R) starts accumulating part of the condensate at chamber (3) base which, besides helping thermal exchange with the new stream entering chamber (3), absorbs part of its components, following to the recovery cycle of the remaining gaseous mixture. In such a situation, chamber (3) starts working as an absorption chamber as well.

Remaining gaseous mixture then follows through passage (21) until chamber (11) where it goes down to opening (14), crosses the evaporative elements (12), and follows to the next chamber (10). Upon entering chamber (10), gaseous mixture goes up to cross the evaporative elements (12) and then passes to the next chamber (9), goes down until opening (14), passes to chamber (8) where it goes up towards opening (15), crosses the evaporative elements (12) and then joins the stream of gaseous mixture that has just entered the equipment (R) allowing for the absorption of the mixture in its own condensates and starting its cycle again until complete volatile liquid recovery.

This change of direction and orientation of gaseous mixture stream (vertically ascending, horizontally and vertically descending/ascending) contributes, along with temperature reduction, to increase gaseous mixture density and viscosity.

This way, chambers (8, 9, 10, 11) work as condensation units, each one of them comprising evaporative elements (12) for heat exchange that cool gaseous mixture entering equipment (R). Said evaporative elements (12) for heat exchange are designed according to the needs of the required thermal exchange, available area for equipment installation, nature and average temperature of inlet vapor.

Once the cycle of gaseous mixture stream is carried out, each chamber (3, 8, 9, 10, 11) allowed the condensation of part of the gaseous mixture that has been deposited on its base, acting as an element for the thermal exchange with the next gaseous mixture stream which increases equipment (R) efficiency.

The number and size of openings (14) vary according to the drainage characteristics or needs.

Optionally, metal elements (13) of high specific area are arranged between the evaporative elements (12) to increase contact and direct gaseous mixture stream, enhancing drainage turbulence and retaining heat. The number of metal elements (13) varies according to the space between the two evaporative elements (12).

In this specific illustrated example, there are two layers of evaporative elements (12) where metal elements (13) are positioned, which, specifically, are metal screens (not illustrated) that retain the liquefied vapor thus helping achieve Reynolds number and Nusselt number values and ensuring optimization of heat transfer by simultaneous convection and conduction processes. Part of the condensed gas is retained in the metal screens and forms liquid films through which the gases pass. With the increase in the amount of liquid, a backwash dripping on the gas stream is started, thus increasing the thermal exchange efficiency and, consequently, liquid recovery yield.

The thermal capacity and screen area work as a heat exchange area and absorption area of the gas into the liquid.

Equipment (R) may be used in storage tank (T) loading and unloading, whether they are aerial, underground, vertical or horizontal ones.

When loading a storage tank (T) gaseous mixture in balance, vapor-liquid, preexisting in the tank (T) is displaced to pipe (1) with stopcock (4) closed.

As previously described, gaseous mixture enters chamber (3), whose temperature is below -40°C, causing condensation of vapor present in the mixture and accumulating liquid in chamber (3) thus overtaking inlet pipe (1). When the proper height to each project, specific for each piece of equipment (R), is achieved, stopcock (4) is opened to keep the level constant. Recovered liquid in chamber (3) is used as a bed of absorption for the gaseous mixture compounds, thus promoting both absorption and condensation as well as volume and speed reduction of gaseous mixture.

Gaseous mixture coming from this bed of absorption is directed to the first condensation stage in chamber (11) traveling through the evaporative elements (12) and metal elements (13).

Pipe (5) comprises a stopcock (6) and a flow meter (7) that continually indicates instant flow value and its total. Flow meter (7) remains in operation whenever liquid level in chambers (8, 9, 10, 11) reaches a minimum volume of condensates to take it out of its inertia and measure liquid flow coming out of chamber (11). This way, condensate deposited on the bottom of chambers (8, 9, 10, 11) is released and is then transferred to tank (T) through pipe (5).

Gaseous mixture reaches the bottom of first condensation chamber (11) and is then directed to second chamber (10) or condensation stage through opening (14); the operation is repeated until the last condensation chamber (8). Recovered liquid in each of these chambers goes through the same procedure as that described in the first condensation stage in chamber (11).

As the last condensation chamber (8) is achieved, part of gaseous mixture which is now colder, having condensable substances or not, enters in circulation again, joining the inlet gaseous mixture stream (which is hotter). This recirculation is spontaneously controlled and thus remains while the difference in pressure is favorable. When vapor pressure inside equipment (R) is higher than that of relief valve (18) regulation, the mixture is released into the atmosphere after percolation in the adsorbent material cartridge (17) contained inside pipe (16) and used to adsorb the residual concentration of volatile organic compounds.

When storage tanks (T) are discharged, inlet air in equivalent volume must go in where the suction brought by the discharge of storage tank (T) causes air to enter through relief valve (18) and then it is percolated in the adsorbent material cartridge (17) and transferred to storage tank through pipe (1 and/or 5). The path traveled by the air is in an inverse way to gaseous mixture path containing volatile organic compounds and, therefore, will be cooled and the entire moisture will be condensed in equipment (R) ensuring the entry of moisture-free air into the storage tank.

As the melting temperature of water is higher than that of the equipment (R) operation, a defrosting and heating system (not illustrated) of the evaporator assemblies (12) operating in a discontinued regimen according to the need in a separate time from tank (T) loading is provided. In the case of high volatility volatile organic compounds, water is denser than these compounds and insoluble with them, thus allowing for their separation.

Figures 3 to 6 is a schematic illustration of tanks (T), open or closed, and the release of gaseous mixtures (V) of liquid (L) into the atmosphere (A).

Figure 3 illustrates the molecules of a liquid (L) included in a tank (T) having a kinetic energy differentiated from one another. The molecules that reach the liquid-gas interface may come out of the liquid and enter the gas form (V) by means of an evaporation process. The amount of molecules migrating to gas form depends on the liquid nature, interface area, liquid temperature, pressure of gas chamber on the liquid. In this open storage system, liquid evaporation and its escape into the atmosphere (A) takes place in a continuous way with no obstacles.

Figure 4 illustrates a closed storage system with a relief valve (V2). In this system, the liquid (L) molecules are transferred to the gas form (V) up to the limit of the liquid-gas balance. In balance, the molecules moving on both directions, vapor-liquid or liquid-gas, have identical rates. Pressure exerted by the gas (V) cloud above the liquid (L) over the interface is called vapor pressure. The closed system is provided with a relief valve (V2) regulated both to open in positive pressure, caused by evaporation, and in negative pressure, caused by the removal of liquid through a pump (B). Depending on the regulation and maintenance applied to relief valve (V2), the amount emitted into the atmosphere (A) is much smaller than in the open system illustrated in figure 3.

Figure 5 illustrates a process of renovation of the gaseous phase (V), that is, when liquid (L) is drawn through the pump (B) an equivalent volume of air from the atmosphere (A) enters. The air coming into the system has moisture and a new balance is established, both by the migration of liquid (L) molecules for the gas form (V) and water from gas form to liquid (L) form. Relative position of water transferred to the liquid (L) depends on the relationship between densities and solubility of liquid (L) and water (G).

Figure 6 illustrates the recharge of liquid (L) into the tank (T), wherein a full replacement of tank (T) volume is carried out. During that operation, the entire gas form inside tank (T) is discharged into the atmosphere (A), causing serious occupational health problems, pollution and safety problems and commercial loss of volatile products.

In another aspect, the present invention deals with a process for recovering volatile liquids comprising the following stages:
a) Collecting gaseous mixtures released from volatile liquids in storage tanks (T);
b) Absorbing volatile compounds from the gaseous mixture into a chamber (3) kept at negative temperature;
c) Submitting gaseous mixture resulting from stage "b" to evaporative elements (12) in a series of chambers (8, 9, 10, 11) in an alternate ascending and descending flow between chambers;
d) Internal recirculating gaseous mixture resulting from stage "c" so as to join gaseous mixture resulting from stage "b";
e) Submitting gaseous mixture through metal elements (13) with a high specific area so as to increase contact of gaseous mixture stream with evaporative elements (12);
f) Returning obtained condensate to storage tank (T).

After carrying out the foregoing stages, a new gaseous mixture stream is sent to equipment (R) through pipe (1), thus entering chamber (3) passing through the formed condensate and then following to the other stages in the process; in each chamber (8, 9, 10, 11), besides having stage (c) of submitting the stream to evaporative elements (12), the remaining gaseous mixture is also submitted to the thermal exchange with the condensate deposited at the bottom of the chamber.

When equipment (R) is comprised by metal elements (13), gaseous mixture also faces these obstacles thus increasing efficiency of its recovery as liquid, so as to be retained in the metal elements (13), forcing the gases to go through them. As the amount of liquid increases, it becomes detached from the metal elements (13) dripping against the gaseous mixture on its ascending flow path.

The present process is preferably carried out using the equipment of the present invention that directs the gaseous mixture stream in different directions and orientations (vertically ascending, horizontally and vertically descending) which, together with temperature reduction, contributes to increase density and viscosity of gaseous mixture.

A person skilled in the art will be able to introduce changes and modifications from the drawings and description presented without departing from the scope of the invention as defined in the attached claims.

## Claims

1. Apparatus for recovering volatile liquids comprising a housing (C), at least one inlet pipe (1) of gaseous mixture and at least one outlet pipe (5) of recovered liquid; said housing (C) being divided into a series of vertical plates (19a, 19)), interrupted before the inner upper face of the housing (C), and forming consecutive absorption and condensation chambers (3, 8, 9, 10, 11) from the inlet pipe (1) to the outlet pipe (5); said plates (19a and 19) are provided with an upper closure element (20) limiting the chambers (8, 9, 10) and forming an upper passage (21); plates (19) further comprise openings (14) that allow for the passage of gaseous mixture among the chambers (8, 9, 10, 11); equipment is further comprised by at least one evaporative element (12) transversally arranged in the chambers (8, 9, 10, 11); and, at least one opening (15) in the element (20) for the gaseous mixture to come out of the chamber (8) into the passage (21).

2. Apparatus for recovering volatile liquids, as defined in claim 1, wherein the plate (19a) is made up from the housing (C) base, while plates (19) are minimally away from its base so as to allow for the passage of the condensate from one chamber to the other and be later guided to outlet pipe (5).

3. Apparatus for recovering volatile liquids, as defined in claim 1, comprising a pipe (16) from chamber (8) with a relief valve (18).

4. Apparatus for recovering volatile liquids, as defined in claim 3, wherein the pipe (16) comprises an adsorbent material cartridge (17).

5. Apparatus for recovering volatile liquids, according to any claims 1 to 4, wherein the housing (C) is thermally insulated.

6. Apparatus for recovering volatile liquids, as defined in any claims 1 to 5, comprising a branch pipe (2) derived from pipe (1) connected to the outlet pipe (5) and provided with a stopcock (4) for flow control.

7. Apparatus for recovering volatile liquids, as defined in any claims 1 to 6, comprising metal elements (13) for directing the stream between the evaporative elements (12).

8. Apparatus for recovering volatile liquids, as defined in any claims 1 to 7, wherein the pipe (5) comprises a stopcock (6) and a flow meter (7).

9. Apparatus for recovering volatile liquids, as defined in any claims 1 to 8, comprising a defrosting system.

10. Process for recovering volatile liquids, comprising the following stages:
a) Collecting gaseous mixtures released from volatile liquids in storage tanks (T);
b) Absorbing volatile compounds from the gaseous mixture into a chamber (3) kept at negative temperature;
c) Submitting gaseous mixture resulting from stage "b" to evaporative elements (12) in a series of chambers (8, 9, 10, 11) in an alternate ascending and descending flow between the chambers;
d) Internal recirculating gaseous mixture resulting from stage "c" so as to join gaseous mixture resulting from stage "b";
e) Submitting gaseous mixture through metal elements (13) with a high specific area so as to increase contact of gaseous mixture stream with evaporative elements (12);
f) Returning obtained condensate to storage tank (T).

11. Process for recovering volatile liquids, as defined in claim 10, comprising a stage wherein gaseous mixture resulting from stage "d" is submitted to a thermal exchange with the condensate obtained in the thermal exchanges from stage "c" deposited in each chamber (8, 9, 10, 11).

12. Process for recovering volatile liquids, as defined in any claim 10 or 11, wherein it is carried out in a piece of equipment according to any claims from 1 to 9.
